Europäisches Patentamt

European Patent Office

Office européen des brevets

(19)

(11) Publication number: **0 006 397**
**B1**

## EUROPEAN PATENT SPECIFICATION

(12)

(45) Date of publication of patent specification: **12.05.82**

(51) Int. Cl.³: **B 30 B 9/30,** A 01 F 15/14, B 65 B 13/28

(21) Application number: **79850050.0**

(22) Date of filing: **28.05.79**

(54) Tying device in baling presses.

(30) Priority: **29.05.78 SE 7806115**

(43) Date of publication of application:
**09.01.80 Bulletin 80/1**

(45) Publication of the grant of the patent:
**12.05.82 Bulletin 82/19**

(84) Designated Contracting States:
**DE FR GB IT NL**

(56) References cited:
**DE - A - 2 460 464**
**DE - A - 2 733 811**
**DE - C - 968 219**
**US - A - 3 667 377**

(73) Proprietor: **PERSÖNER VERKSTAD AB**
**Fack**
**S-271 00 Ystad (SE)**

(72) Inventor: **Andersson, Bo Anders**
**Sturegatan 15**
**S-271 00 Ystad (SE)**

(74) Representative: **Henrikson, Olof P.S. et al,**
**Lars Holmqvist Patentbyra AB Box 4289**
**S-203 14 MalmÖ 4 (SE)**

Courier Press, Leamington Spa, England.

## Tying device in baling presses

The present invention relates to a tying device in baling presses and, more particularly, to a device for binding bales of material which are compressed in a compaction channel by means of a plunger.

Prior devices or apparatuses of this kind are described in e.g. U.S. Patent Specifications Nos. 3,667,377 and 3,789,751 and German Specification DE—C—934,795. These prior apparatuses include means for continuously feeding and guiding at least one wire or a band along opposite walls of the compaction channel, a needle assembly supported by a support device and having at least one needle for catching the wires and carrying them through the compaction channel in its transversal direction, the needle being arranged to be moved through opposite openings in the walls of the channel and through a groove at the free end of the plunger in alignment with the openings, when the plunger takes its front extreme position for compressing the material, at least one twister assembly arranged on the other side of the channel in relation to the needle assembly, having two rotary twister hooks on separate shafts at a relative distance for gripping the wires and twisting these together, and a cutting assembly for cutting off the wires between the twister hooks.

The German Specification DE—C—934,795 discloses a tying device, which uses only one wire, which is brought around the bales of material, whereafter the two ends are twisted together.

These prior apparatuses for binding bales operate comparatively satisfactorily for short periods but have a complex structure and many movable parts. Consequently, a simpler apparatus for binding bales is needed, which can operate for long periods without supervision.

An object of the invention is to provide a device for binding bales, which apparatus obviates the drawbacks of previously known bale binding apparatuses and permits a more reliable operation. This object is achieved by means of a device for binding bales of material, as defined above, wherein the twister hooks are fixed to a common shaft for rotation therewith. The shaft has a gear wheel fixed thereon between the twister hooks. The cutting assembly includes a rack which is slidingly supported in the body of the twister assembly and in mesh with the gear wheel on the shaft for movement transversal to the shaft. The cutting means includes a fixed cutter member on the body of the twister means adjacent the rack and a movable cutter member fixed on the rack for co-operation with the fixed cutter member. The rack is operatively actuatable for rotating the shaft, thereby serving as a common actuating means for the twister assembly and the cutting assembly.

The invention will be described in greater detail below, reference being made to the attached drawing, in which

Fig. 1 is a partial cross-sectional view through a compaction channel, showing a previously known binding apparatus according to U.S. Patent Specification No. 3,667,377, the principal parts of the binding apparatus being shown schematically;

Fig. 2 is a schematic top view of a binding apparatus according to the invention and showing the twister assembly, the compaction channel being shown in section;

Fig. 3 is a view similar to that of Fig. 2 but after activation of the twister assembly;

Fig. 4 and Fig. 4b is a side elevational view and an end view, respectively, of the twister assembly of the apparatus according to the invention;

Fig. 5 is a view similar to that of Fig. 4b but on an enlarged scale and restricted to one single twister assembly;

Fig. 6 is a cross-sectional view through the twister assembly according to Fig. 5 taken along line VI—VI; and

Fig. 7 is a cross-sectional view through the twister assembly according to Figs. 5 and 6 taken along a line VII—VII in Fig. 6.

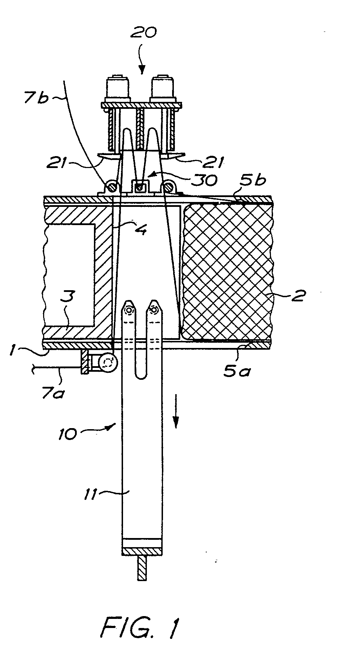

Fig. 1 illustrates a prior art binding apparatus described in U.S. Patent Specification No. 3,667,377. This binding apparatus is shown schematically in a position after activation and the needle of the needle assembly moving away from the twister assembly. As appears from Fig. 1 a needle assembly 10 is arranged in connection with a compaction channel 1 (shown in cross-section), in which compressible material is compressed by means of a plunger 3 (shown in cross-section), which is shown in its outer extreme position for compressing the material to a partly shown bale 2, which is to be tied. A groove 4 is made at the outer end of the plunger and is in alignment with opposite openings 5a and 5b in the walls of the channel, when the plunger is in its outer extreme position.

Wires 7a and 7b are arranged to be fed and guided along the opposite walls of the compaction channel, in which openings 5a and 5b are arranged.

The needle assembly 10 is arranged in front of the openings 5a and 5b at one wall of the channel and a twister assembly 20 is arranged at the other wall of the channel. Only one needle unit 11 of the needle assembly is shown, which is arranged to be moved across the compaction channel through the opening 5a, the groove 4 of the plunger and the opening 5b to catch the wires at its front end and then carry these out of the plunger to the twister assembly. Generally the needle assembly have several needles, each of which co-operates with a twister assembly.

The twister assembly has two twister hooks 21, which are arranged at a relative distance and which are rotatable around each shaft. The twister hooks are activated when the needle has been moved to the twister assembly, and are brought into the two loops formed by the wires and twist together the wires.

When the twisting operation is terminated, a cutting device 30 is activated to cut off the wires.

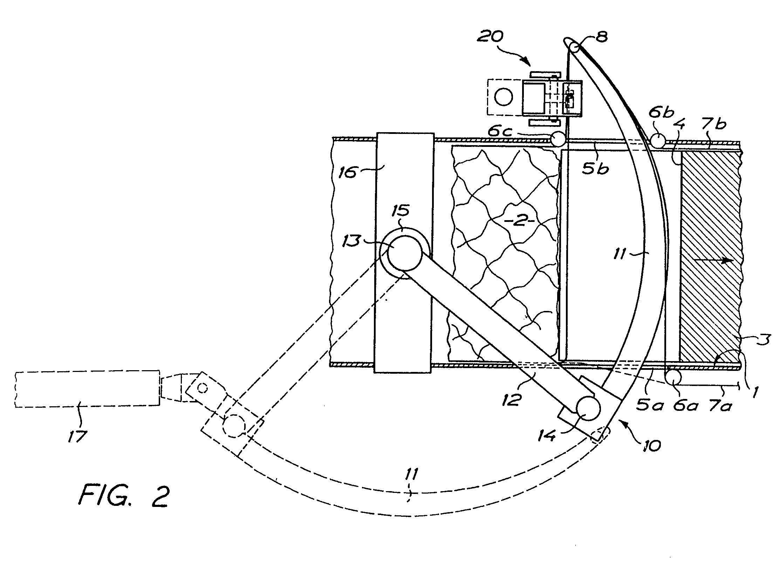

The structure of the binding apparatus according to the invention is shown in Fig. 2, which illustrates a preferred embodiment schematically. Like the binding apparatus described above the binding apparatus according to the invention is arranged in connection with a compaction channel 1 (shown in section), in which a movable plunger is arranged for compressing the material to be bound. Means are arranged to feed and guide at least one wire, band or the like 7a, 7b along opposite walls of the compaction channel 1, which wires serve as binding means. The wires 7a and 7b are dispensed from supply spools not shown and guided by means of pulleys or other guiding means, of which only three are shown, namely a pulley 6a at one side of the compaction channel 1 and pulleys 6b, 6c at the opposite side of the compaction channel.

Like the prior art apparatus the binding apparatus according to the invention comprises a needle assembly 10 having at least one needle 1, which in its longitudinal direction is arranged to be brought across through the compaction channel through openings 5a and 5b in the compaction channel and a groove 4 made at the outer end of the plunger.

A twister assembly 20 is arranged to twist together the said wires, when these have been carried away from the channel by means of the needle 11.

The needle assembly of the binding apparatus according to the invention has generally a plurality of needles working in parallel and a twister assembly is arranged to co-operate with each needle 11. The description below will be restricted in the main to one needle and one twister assembly, since this is sufficient to describe the structure and operation of the invention.

Even if the needle assembly 10 may be positioned on the same side of the compaction channel as the twister assembly 20 it is positioned on the opposite side of the compaction channel in a preferred embodiment of the binding apparatus. According to the invention the needle assembly may also be embodied differently and dependent thereon the support will be different. Thus, the needle assembly may have an essentially straight needle, which is supported to be carried in its longitudinal direction across the channel or have curved needle, which is supported to swing through the groove of the plunger and the said openings in the compaction channel.

In the binding apparatus according to the invention the needle 11 of the needle assembly has at least at its free end, which is arranged to catch and carry the wires 7a, 7b through and out of the compaction channel on the other side thereof, a projecting or curved portion. This means that the needle has a portion at its free end, which deviates from the main direction of the needle. The object of this portion will appear below at the description of the operation of the binding apparatus. In the preferred embodiment illustrated in the drawing the needle 11 is shaped as an elongate sickle, i.e. it consists of a thin, curved element, having an essentially circular curve. At the free end of the needle a catch means 8 in the shape of a cross-mounted leg against the longitudinal direction of the needle is arranged, which leg has a curved circumference so that the wires 7a, 7b will slide over the leg, when the needle carries along the wires during its movement across the compaction channel.

The needle 11 has such an extension that, when it is moved through the compaction channel 1 with its free end, the other end will be at the inlet 5a of the compaction channel. The needle is supported at its other end opposite the free end by a support device. Thus, the needle 11 is firmly secured to a swinging arm 12 rotatably supported on a shaft 13, which is perpendicular to the plane in which the needle is operating. The shaft 13 is the centre of the curvature of the essentially circular curve of the needle.

The shaft 13 is rotatably supported by a suitable bearing 15, which is mounted to a cross bar 16.

A complete needle assembly with a plurality of needles has two swinging arms 12, each of which is supported on a separate shaft 13 at opposite walls of the compaction channel, the swinging arms being connected at their ends turned away from the shafts by means of a cross-element 14, to which the needles 11 are preferably firmly secured at relative distance in order to make passage possible through the corresponding openings 5a, 5b in the compaction channel and the corresponding grooves 4 at the free end of the plunger.

An actuating device 17 is also connected with said other side of the needle, which is arranged, upon activation, to move the needle from its initial position in rest (shown in dashed lines) with the whole needle outside the compaction channel 1 to a position, where the needle extends through the compaction channel with its free end at the other side of the compaction channel and then, upon opposite activation, to pull back the needle to its initial position. The actuation device 17 preferably includes a hydraulic or pneumatic, double-acting piston-cylinder assembly rotatably supported at the two ends of the actuating device.

Fig. 2 illustrates in dashed line the needle assembly of the binding apparatus in its rest position, whereas the needle 11 of the needle assembly and the swinging arm 12 are shown in continuous lines in the position, where the needle has been moved through the compaction channel 1 to hold the wires 7a, 7b adjacent the twister assembly in the twisting and cutting position.

The twister assembly 20 of the binding apparatus according to the invention has, like the twister assembly of the prior art binding apparatus according to U.S. Patent Specification No. 3,667,377, two twister hooks 21 positioned at relative distance and arranged to grip the wires and twist them, when the wires 7a, 7b are carried out of the compaction channel 1 by means of the needle 11.

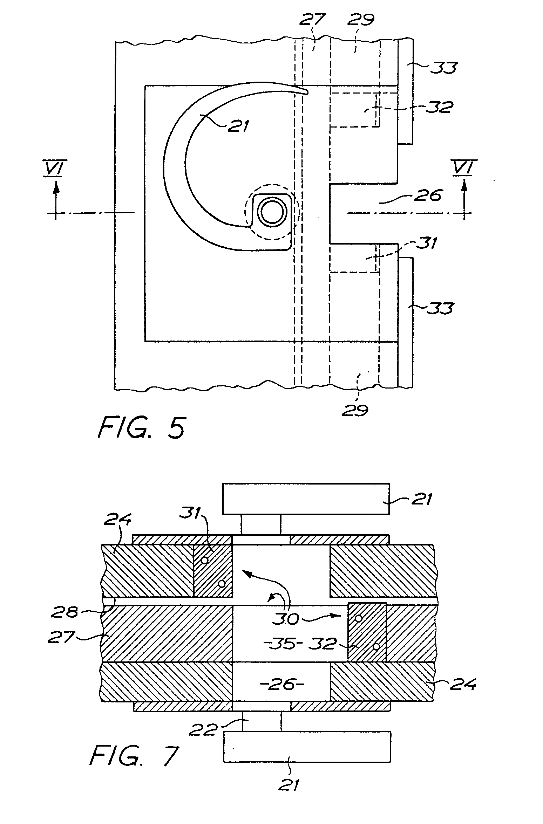

Contrary to the twister assembly according to the prior art binding apparatus the twister hooks 21 of the twister assembly according to the invention are positioned at relative distance essentially in the direction of motion of the needle 11 across the compaction channel. Furthermore, the twister hooks 21 are mounted on one and the same shaft 22. As will appear from Figs. 5, 6 and 7 the twister assembly according to the invention has a body 23 having opposite side portions 24. The shaft 22 extends across the body 23 and is rotatably supported by means of bearings in the side portions 24 of the body. A gear wheel 25 is provided at the centre of the shaft 22 for co-operation with a rack 27, which will be described hereinbelow.

The shaft 22, which is positioned essentially in the direction of motion of the needle 11 across the compaction channel, protrudes from the body past the side portions 24 of the body. The twister hooks 21 which are rigidly attached by suitable means to the ends of the shaft, are positioned at distance from the body and in side relationship.

In the embodiment illustrated in the drawing the shaft 22 is perpendicular to the direction of extension of the compaction channel. However, it is realized that the shaft 22 may form an angle between 0° and 90° to the direction of extension of the compaction channel dependent on the position of the guiding means 6b and 6c and the embodiment of the needle assembly.

The body 23 has, parallel to the shaft 22 and in front thereof, a recess 26 for receiving the wires 7a, 7b to be twisted, when these are carried out of the compaction channel 1 by means of the needle 11. The recess 26 is positioned in alignment with the two openings 5a and 5b in the compaction channel.

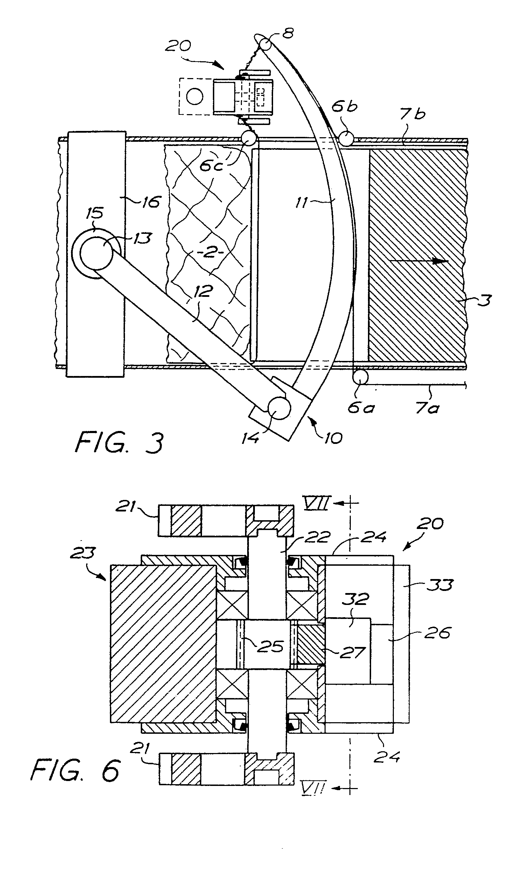

As shown in Figs. 2 and 3 the support device of the needle assembly is preferably positioned in the longitudinal direction of the compaction channel on one side of the openings 5a, 5b and in front of the plunger 3, and the twister assembly 20 is positioned on the same side of the openings and the recess 26 is turned to the plunger 3 in order that the wires may be easily inserted into the recess 26. This position of the support device of the needle assembly and the twister assembly is considered to be the most suitable one, since thereby a wire, extending around a bale to be bound obtain the best stretching. This stretching is attained in that the pulley 6c, which guides the wire 7b, is positioned in front of the plunger, when this assumes its outer extreme position.

The rack 27 already mentioned is arranged to drive the shaft 22 of the twister hooks for rotation of the same and so the twister hooks 21. The rack 27 is in mesh with the gear wheel of the shaft 22 and is slidingly supported in a guiding groove 28 in the body 23 perpendicular to the shaft 22. As appears from Figs. 5 and 6 the rack 27 is extended in its lateral direction by a portion 29, which is arranged to pass through the recess 26 at the reciprocating movement of the rack. This portion 29 of the rack has at its free side a notch 35 having a greater extension in the longitudinal direction of the rack than the recess 26. Cover plates 33 covers the longitudinal aperture in the body 23 defined by the side portions 24 of the body.

A preferred embodiment of the twister hooks 21 is shown in the drawing. However, other embodiments of the twister hooks may provide satisfactory function for catching the wires 7a, 7b, when these extend through the recess 26, and for twisting the wires. According to the preferred embodiment the twister hooks 21 are formed as a sickle, which has an essentially semicircular shape and which is attached at one end to the shaft 22 and tapers off to a point at its free end. Between the inner limited surface of the sickle and a surface of the mounting portion of the sickle, which surface forms an angle with the inner limited surface, a recess is formed, which, when the twister hooks after activation of the twister assembly have rotated about 3/4 of a revolution from the rest position shown in Fig. 5, fixes the wires in their positions in order to carry them along and twist them together around shaft 22.

In the twister assembly a cutting assembly 30 is mounted for cutting off the wires 7a, 7b after the twisting operation has started. The cutting assembly comprises a fixed cutter member 31, which is attached to the body 23 and in connection to the recess 26. This cutter member 31 is mounted to one side of the body with its cutting edge facing the centre plane of the shaft 22 and arranged lateral to this shaft. The cutter member 31 is arranged in the preferred embodiment shown in the drawing to co-operate with a movable cutter member 32 attached to the rack 27 at its notch 35. The cutting edge of the cutter member 32 is arranged to pass close to the cutting edge of the cutter member 31 at displacement of the rack when the notch 35 is brought through and past the recess 26, whereby the wires in the recess 26 are cut off. In the preferred embodiment the cutter members 31 and 32 are blocks fixed by screws to the body 23 and the rack 27, respectively.

It is realized that the wires 7a, 7b are cut off ater a predetermined angle of rotation of the shaft 22. This angle is dependent on the transmission ratio between the gear wheels of the shaft on one hand and, on the other, the distance of the cutter member 32 from the cutter member 31 when the twister assembly assumes its rest position, i.e. essentially the extension of the notch 35 in the longitudinal direction of the rack. Since the rack may be easily changed it is possible to adapt the twister assembly to the kind of wire used for binding the bales. Usually annealed iron wire having a diameter of 2.5 mm is used. This kind of wire is comparatively stiff and in this case it has turned out to be expedient to cut off the wires when the shaft has made about half a revolution after the twister hooks 21 have caught the wires.

According to another embodiment of the twister assembly, which has not been illustrated, the cutter member 32 may be mounted on the shaft 22 of the twister hooks instead of on the rack 27.

The rack is arranged to be operated reciprocally in its longitudinal direction by a driving device, such as a hydraulic cylinder, a hydraulic motor, a gear motor or a worm gear motor.

It is realized that according to the invention the twister assembly 10 and the cutting assembly 20 has one and the same actuating means, namely the rack 27.

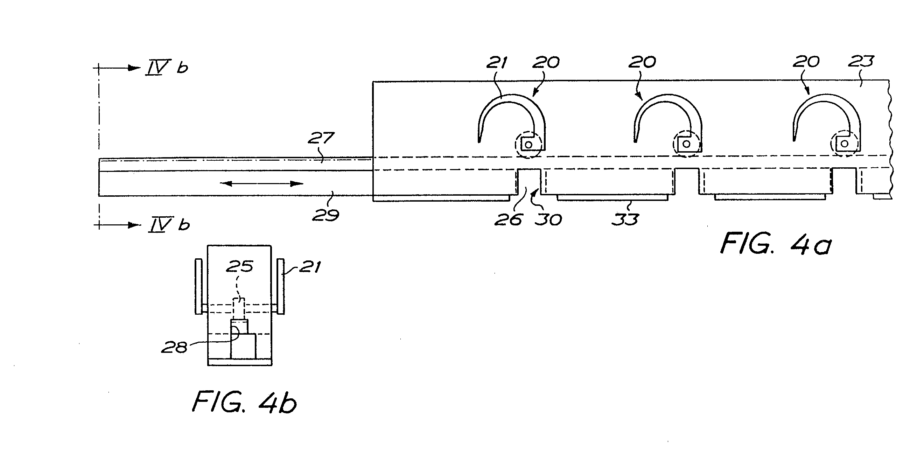

In Figs. 4a and 4b three twister assemblies 20 supported on the same body 23 in parallel relationship are shown. These twister assemblies 20, each of which is arranged to co-operate with a separate needle of the needle assembly, are driven by one and the same rack 27, which co-operates with the respective gear wheel 25 of the twister assemblies for rotation of the shafts 22 of the assemblies and the twister hooks 21 associated therewith.

Preferably the distance between the two cutting edges of the cutting assemblies is different so that the wires will be cut in sequence and not simultaneously.

The operation of the apparatus will be described below, reference being made to the drawing.

The binding apparatus according to the invention is shown in Fig. 2, the needle assembly 10 being in its rest position or initial position (shown in dashed lines). When the plunger 2 has reached its end position and a bale 2 is to be found by the wires 7a, 7b on each side of the compaction channel 1, the actuating device 17 of the needle assembly is activated, whereby the swinging arm 12 carries the needle at rotation through the opening 5a, the groove 4 of the plunger and the opening 5b. The needle 11 catches the first wire 7a and carries this across the compaction channel. At the other end of the compaction channel the needle catches the other wire 7b and carries this out together with the first wire, so that the two wires 7a, 7b are extended across the compaction channel. This position is shown in Fig. 2 by continuous lines and in Fig. 3. In this position the wires are inserted into the recess 26 of the twister assembly.

During the movement of the needle 11 to the position shown in Fig. 2 in continuous lines, the twister assembly is in its rest position, and the twister hooks 21 and the rack 27 in principle are in the positions shown in Fig. 5, whereby the wires 7a, 7b can be inserted into the recess 26 without obstruction. By the fact that, as has been mentioned above, the needle 11 has a projecting portion at its free end across its longitudinal direction, which portion carries the catching device 8, the needle, when in its extended position, will be located outside the recess 26 and will not obstruct the operation of the twister assembly.

At the next operation step the rack 27 is activated and rotates the shaft 22, so that the hooks 21 will catch the two wires and twist these around associates shaft portions adjacent to the respective twister hook. When, after the twister hooks have caught the wires and have started the twisting operation, the shaft 22 has rotated about half a revolution more, the cutter members 31 and 32 of the body 23 and the rack 27, respectively, are arranged to co-operate and the wires are cut between the twister hooks 21, which later during the continued movement of the rack continue to rotate and twist the wires further so that these are safely secured together. This is shown in Fig. 3.

The rack 27 is then moved back in the opposite direction and the twister hooks, during opposite direction, release the twisted wire ends and, almost at the same time, the actuation device 17 of the needle assembly is activated for operation in the opposite direction, whereby the needle 11 swings back to its initial position.

Thus, it is achieved that the bale compressed by means of the plunger is bound and the two wires on each side of the channel are twisted in order to make the binding of the following compressed bale possible.

The actuating device 17 of the needle assembly and the driving means of the twister assembly are controlled for automatic operation by means of a suitable control device, which is arranged to control the binding apparatus dependent on the movements of the plunger, so that the binding device is not activated until a sufficient amount of material has been compressed by the plunger and the plunger being in its outer extreme position.

In the description hereinabove the expression twister assembly has been used with reference to one unit co-operating with one needle of the needle assembly. Generally, in an apparatus for binding bales the needle assembly includes several needles each co-operating with a separate twister unit or twister means, as disclosed in Fig. 4a, and a separate cutting assembly. All twister means of the twister assembly is driven by the same reciprocating rack in mesh with the shafts of said twister means.

## Claims

1. Tying device in baling presses for binding bales being compressed by means of a plunger (3) in a compaction channel (1) which has facing openings (5a, 5b) in opposite walls, said device including means (6a, 6b, 6c) for feeding at least one wire (7a, 7b) or the like along each of said opposite walls of the compaction channel and in alignment with said openings (5a, 5b); a twister assembly having a body (23) supporting twister means (20) adjacent one of said openings for twisting said two wires together; a needle assembly (10) having at least one needle (11) for transversal movement across said channel through said openings (5a, 5b) and a groove (4) at the front end of the plunger (3), when the plunger takes its front extreme position for compressing the material, the needle (11) catching said two wires (7a, 7b) and carrying them to said twister means (20); said twister means (20) having two spaced twister hooks (21) for seizing the wires (7a, 7b) and twisting the wires together at two locations, and a cutting assembly having cutting means (31, 32) for cutting off the wires between said locations, characterized in that said spaced twister hooks (21) are fixed to a common shaft (22) for rotation therewith, that said shaft has a gear wheel (25) fixed thereon between the twister hooks (21), that the cutting assembly includes a rack (27) slidingly supported in the body (23) of the twister assembly and in mesh with said gear wheel (25) on said shaft (22) for movement transversal to said shaft, said cutting means including a fixed cutter member (31) on the body of said twister means adjacent the rack (27) and a movable cutter member (32) fixed on the rack (27) for co-operation with the fixed cutter member; said rack (27) being operatively actuatable for rotating the shaft, thereby serving as common actuating means for the twister assembly and the cutting assembly.

2. The device as claimed in claim 1, characterized in that said body (23) of the twister assembly adjacent and parallel to said shaft (22) has a recess (26) facing away from the shaft and for receiving the wires (7a, 7b) carried by the needle (11) and that the fixed cutter member (31) is mounted adjacent to said recess.

3. The device as claimed in claim 1 or 2, characterized in that the rack (27) has a lateral notch (35) facing away from the shaft of the twister hooks, said notch to be located in position with the recess (26) when the twister assembly (20) is set to receive the wires, and that the movable cutter member (32) is mounted in said catch.

4. The device as claimed in any one of claims 1 to 3, characterized in that the needle assembly comprises a plurality of needles (11) supported in parallel, each needle (11) being arranged to be moved through a separate groove (4) in the plunger (3) and associated openings (5a, 5b) in the compaction channel (1), and co-operating with separate twister means (20) of the twister assembly as well as with a separate cutting means (30) of the cutting assembly, the shafts (20) of said twister means (20) being driven by said rack (27) in common.

## Patentansprüche

1. Vorrichtung zum Binden von Stoffballen, die mittels eines Presskolbens (3) in einem Verdichtungskanal (1), der mit gegenüberliegenden Wandungen mit gegenüberliegenden Öffnungen (5a, 5b) versehen ist, zusammengedrückt werden, mit Mitteln (6a, 6b, 6c) zum Zuführen mindestens eines Drahtes (7a, 7b) oder dergleichen entlang jeder der gegenüberliegenden Wandungen des Verdichtungskanals und in gerader Linie mit der Öffnungen (5a, 5b); einer Drehanordnung mit einem Körper, der ein Drehmittel (20) angrenzend an eine der Öffnungen zum Zusammendrehen der zwei Drähte trägt; einer Nadelanordnung (19) mit mindestens einer Nadel (11) zu der querlaufenden Bewegung über den Kanal durch die Öffnungen (5a, 5b) und durch eine Nut (4) am Vorderende des Presskolbens, wenn der Presskolben seine äusserste vordere Stellung zum Zusammendrücken des Stoffballens einnimmt, wobei die Nadel (11) der zwei Drähte (7a, 7b) erfasst und zum Drehmittel (20) mitreisst; wobei das Drehmittel (20) zwei abliegende Drehhaken (21) besitzt, die zu der Belegung der Drähte (7a, 7b) und der Zusammendrehen der Drähte an zwei Stellen angeordnet sind, und einer Schneidanordnung mit Schneidglieder (31, 32) zum Abschneiden der Drähte zwischen den Stellen, dadurch gekennzeichnet, dass die abliegende Drehhaken (21) an einer gemeinsamen Welle (22) zur Drehung damit befestigt ist, dass die Welle ein zwischen den Drehhaken (21) befestigtes Getriebrad (25) besitzt, dass die Schneidanordnung eine Zahnstange (27) umfasst, die im Körper (23) der Drehanordnung verschiebbar unterstütz wird und die mit dem Getriebrad (25) an die Welle (22) in Eingriff steht zur Bewegung querlaufend zur Welle, dass die Schneidanordnung ein festliegendes, am Körper der Drehanordnung angrenzend die Zahnstange (27) angeordnetes Schneidglied (31) und ein bewegliches, auf der Zahnstange befestigtes Schneidglied (32) zur Zusammenwirkung mit dem festliegenden Schneidglied umfasst, dass die Zahnstange (27) arbeitsmässig zur Drehung der Welle betätigbar ist, wobei die Zahnstange als gemeinsames Betätigungsmittel für das Drehmittel und die Schneidanordnung wirkt.

2. Vorrichtung nach Anspruch 1, dadurch gekennzeichnet, dass der Körper (23) der Drehanordnung angrenzend und parallel zur Welle (22) eine von der Welle abgewandte Ausnehmung (26) zur Aufnahme der Drähte (7a, 7b) besitzt, die durch die Nadel (11) getragt werden, und dass das festliegende Schneidglied (31) angrenzend zur Ausnehmung montiert ist.

3. Vorrichtung nach Anspruch 1 oder 2, dadurch gekennzeichnet, dass die Zahnstange (27) einen von der Welle der Drehhaken abgewandten Querschlitz (35) besitzt, der in die Stellung der Ausnehmung aufgenommen ist, wenn die Drehanordnung (20) zur Aufnahme der Drähte eingestellt ist, und dass das bewegliche Schneidglied (32) in diesem Querschlitz montiert ist.

4. Vorrichtung nach einem der Ansprüche 1 bis 3, dadurch gekennzeichnet, dass die Nadelanordnung eine Vielzahl von parallel gehaltenen Nadeln (11) umfasst, wobei jede Nadel (11) derart angeordnet ist, dass sie sich durch eine getrennte Nut (4) im Presskolben (3) und durch die zugehörigen Öffnungen (5a, 5b) im Verdichtungskanal (1) bewegt und mit dem separaten Drehmittel (20) der Drehanordnung, sowie mit einem separaten Schneidglied (30) der Schneidanordnung zusammenwirkt, wobei die Wellen (20) des Drehmittels (20) durch die gemeinsame Zahnstange (27) angetrieben werden.

## Revendications

1. Appareil de ficelage pour presses à balles servant à lier des balles en train d'être comprimées à l'aide d'un plongeur (3) dans un conduit de tassement (1) qui comporte des ouvertures (5a, 5b) placées l'une en regard de l'autre dans des parois opposées, ledit appareil comprenant des moyens (6a, 6b, 6c) pour amener au moins un fil (7a, 7b) ou un article similaire le long de chacune desdites parois opposées du conduit de tassement et en alignement avec lesdites ouvertures (5a, 5b); un ensemble de torsion comportant un corps (23) supportant un moyen de torsion (20) placé à côté d'une desdites ouvertures pour tordre ensemble les deux fils précités; un ensemble d'aiguilles (10) comportant au moins une aiguille (11) destinée à se déplacer transversalement audit conduit au travers desdites ouvertures (5a, 5b) et d'une rainure (4) située à l'extrémité avant du plongeur (5), quand le plongeur prend sa position extrême avant pour comprimer le matériau, l'aiguille (11) attrapant les deux fils précités (7a, 7b) et les transportant jusqu'au moyen de torsion (20); ledit moyen de torsion (20) comportant deux crochets de torsion (21) espacés et servant à saisir les fils (7a, 7b) et à les tordre ensemble en deux endroits, ainsi qu'un ensemble de coupe comportant des moyens de coupe (31, 32) servant à sectionner les fils entre lesdits endroits, caractérisé en ce que lesdits crochets de torsion espacés (21) sont fixés sur un arbre commun (22) de manière à tourner avec lui, en ce que ledit arbre porte un engrenage (25) fixé entre les crochets de torsion (21), et ce que l'ensemble de coupe comprend une crémaillère (27) supportée de manière à glisser dans le corps (23) de l'ensemble de torsion et en prise avec ledit engrenage (25) fixé sur l'arbre (22) afin d'exécuter un mouvement transversal audit arbre, lesdits moyens de coupe comprenant un élément de coupe fixe (31) placé sur le corps dudit ensemble de torsion dans une position adjacente à la crémaillère (27) et un élément de coupe mobile (32) fixé sur la crémaillère (27) de façon à coopérer avec l'élément de coupe fixe; ladite crémaillère (27) pouvant être actionnée en vue de faire tourner l'arbre, en servant ainsi de moyen commun d'actionnement pour l'ensemble de torsion et l'ensemble de coupe.

2. Appareil selon la revendication 1, caractérisé en ce que ledit corps (23) de l'ensemble de torsion, adjacent et parallèle audit arbre (22), comporte un évidement (26) qui est dirigé à l'opposé de l'arbre et qui est destiné à recevoir les fils (7a, 7b) portés par l'aiguille (11) et en ce que l'élément de coupe fixe (31) est monté à côté dudit évidement.

3. Appareil selon la revendication 1 ou 2, caractérisé en ce que la crémaillère (27) comporte une encoche latérale (35) orientée à l'opposé de l'arbre des crochets de torsion, ladite encoche étant placée en position par rapport à l'évidement (26) quand l'ensemble de torsion (20) est réglé pour recevoir les fils, et en ce que l'élément de coupe mobile (32) est monté dans ladite encoche.

4. Appareil selon l'une quelconque des revendications 1 à 3, caractérisé en ce que l'ensemble d'aiguilles comprend plusieurs aiguilles (11) supportées parallèlement, chaque aiguille (11) étant agencée pour être déplacée au travers d'une rainure séparée (4) du plongeur (3) et d'ouvertures associées (5a, 5b) du conduit de tassement (1) et coopérant avec des moyens séparés de torsion (20) de l'ensemble de torsion, ainsi qu'avec un moyen de coupe séparé (30) de l'ensemble de coupe, les arbres (20) desdits moyens de torsion (20) étant entraînés en commun par ladite crémaillère (27).

FIG. 1

FIG. 2

FIG. 3

FIG. 6

FIG. 4a

FIG. 4b

FIG. 5

FIG. 7